# DEMANDE DE BREVET EUROPEEN

(11) **EP 3 309 011 A1**
(43) Date de publication de la demande: **18.04.2018**
(21) Numéro de dépôt: 17194883.9
(22) Date de dépôt: 05.10.2017
(51) Int. Cl.: B60R 5/04, B60N 2/36

(54) **BRIDE DE MAINTIEN D'UN SUPPORT DE CACHE-BAGAGES ET VEHICULE COMPRENANT UNE TELLE BRIDE**

(30) Priorité: 13.10.2016 FR 1659932
(71) Demandeur: PSA Automobiles SA, 78300 Poissy (FR)
(72) Inventeur: GIRAULT, LAURENT, 93700 DRANCY (FR)

(57) **Abrégé**

L'invention porte sur une bride (40) de maintien d'un support (30) de cache-bagages (20) de véhicule automobile (100), ledit véhicule (100) comprenant un siège présentant un dossier rabattable, ainsi que des moyens d'attache (10) dudit dossier rabattable ou démontable du siège, ladite bride de maintien (40) étant adaptée pour être fixée aux moyens d'attache (10) et ladite bride de maintien (40) étant configurée pour recevoir le support (30) de cache-bagages (20) pour permettre le montage dudit support (30) de cache-bagages (20) sur lesdits moyens d'attache (10).

## Description

L'invention concerne, de façon générale, les supports de cache-bagages, en particulier montés au sein de véhicules automobiles.

L'invention porte plus particulièrement sur un système de montage d'un support de cache-bagages au sein d'un véhicule automobile.

De manière connue, un véhicule automobile comprend un volume de stockage dans lequel un utilisateur peut déposer ses bagages afin de les transporter dans le véhicule. Ce volume de stockage, également désigné « compartiment à bagages », est généralement situé à l'arrière du véhicule, derrière les sièges.

Pour limiter la visibilité des bagages depuis l'extérieur du véhicule lorsque ce dernier est stationné, il est connu de cacher l'intérieur du compartiment à bagages à l'aide d'un cache-bagages se présentant sous la forme d'une plaque opaque montée au-dessus du compartiment à bagages.

Le cache-bagages est monté dans le véhicule à l'aide d'un support se présentant sous la forme d'une armature montée sur le véhicule par un système de montage.

On connaît par le document FR2968615 A1 un système de montage d'un cache-bagages comprenant une pièce de fixation coopérant avec des moyens d'emboîtement du véhicule afin de monter le système dans le véhicule.

Cependant une telle solution présente des inconvénients. En effet, ce système de montage nécessite des moyens supplémentaires d'emboîtement dans le véhicule, ce qui augmente le coût du véhicule. De plus, ces moyens d'emboîtement sont propres à chaque véhicule, ce qui nécessite de développer et fabriquer des moyens d'emboîtement spécifiques pour chaque véhicule et représente donc un inconvénient majeur.

L'invention vise donc à résoudre ces inconvénients en proposant un système permettant de monter de manière aisée, fiable et peu coûteuse un support de cache-bagages dans un véhicule.

Pour parvenir à ce résultat, la présente invention concerne une bride de maintien d'un support de cache-bagages de véhicule, ledit véhicule comprenant un siège présentant un dossier rabattable ou démontable, ainsi que des moyens d'attache dudit dossier rabattable du siège, ladite bride de maintien étant adaptée pour être fixée aux moyens d'attache et ladite bride de maintien étant configurée pour recevoir le support de cache-bagages pour permettre le montage dudit support de cache-bagages sur lesdits moyens d'attache.

Grâce à la bride selon l'invention, un support de cache-bagages peut être monté sur les moyens d'attaches des dossiers rabattables ou démontables, ce qui permet d'éviter une pièce supplémentaire dans le véhicule pour monter le support. De plus, la bride est compatible avec différents types de véhicule, ce qui limite le nombre de systèmes différents de montage d'un support. Enfin, la bride est facile à fixer au véhicule par serrage de part et d'autre des moyens d'attache et ce à l'aide d'une unique vis, ce qui limite le nombre d'opérations lors d'une telle fixation.

Avantageusement, la bride comprend au moins un premier élément et un deuxième élément, lesdits premier et deuxième éléments étant adaptés pour être assemblés l'un à l'autre de part et d'autre des moyens d'attache de façon à permettre la fixation de ladite bride aux moyens d'attache.

Avantageusement, la bride comprend une unique vis fixant le premier et le deuxième élément l'un à l'autre.

Avantageusement, la bride comprend un crochet de fixation reliant le premier et le deuxième élément.

L'invention concerne également un véhicule automobile comprenant un siège présentant un dossier rabattable ou démontable, ainsi que des moyens d'attache dudit dossier rabattable ou démontable du siège, au moins une bride de maintien telle que décrite précédemment fixée audits moyens d'attache et un support d'un cache-bagages monté sur les moyens d'attache par ladite bride de maintien.

Avantageusement, le support est fixé à la bride de maintien par serrage entre un élément de la bride de maintien et une tête de vis.

Avantageusement, la bride de maintien comprend un premier et un deuxième éléments montés de part et d'autre des moyens d'attache par serrage à l'aide d'une vis.

Avantageusement, le serrage des éléments de la bride de maintien entre eux et le serrage du support à la bride de maintien sont réalisés par une même vis.

Avantageusement, les moyens d'attache comprennent au moins un crochet d'attache.

Avantageusement, le support de cache-bagages est monté à deux crochets d'attache à l'aide de deux brides de maintien.

D'autres caractéristiques et avantages de l'invention apparaîtront à la lecture de la description détaillée des modes de réalisation de l'invention, donnés à titre d'exemple uniquement, et en référence aux dessins qui montrent :
- la figure 1, un schéma d'une forme de réalisation de la bride de maintien selon l'invention montée dans un véhicule automobile,
- la figure 2, un schéma de la bride de maintien de la figure 1,
- la figure 3, un schéma de côté de la figure 2, et
- la figure 4, un schéma d'un support de cache-bagages monté sur la bride de maintien de la figure 1.

Dans ce qui va suivre, les modes de réalisation décrits s'attachent plus particulièrement à une mise en oeuvre de la bride de maintien selon l'invention au sein d'un véhicule automobile. Cependant, toute mise en oeuvre dans un contexte différent, en particulier dans tout type de véhicule, est également visée par la présente invention.

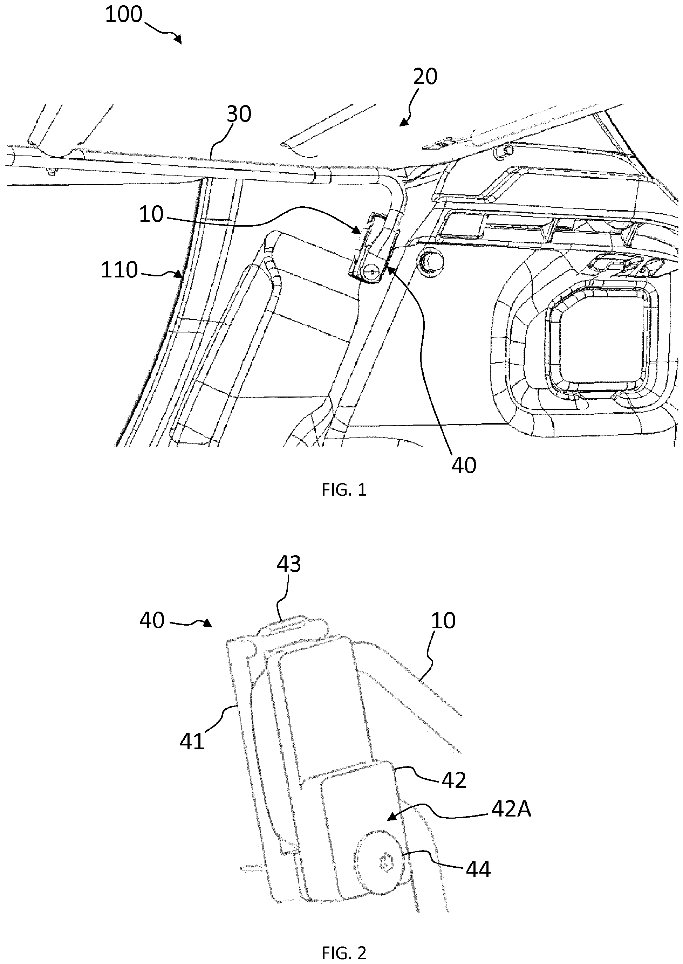

La figure 1 représente une partie de l'intérieur d'un véhicule automobile 100 comprenant un compartiment à bagages dans lequel le conducteur du véhicule 100 peut stocker ses affaires.

Dans la suite de la description, les termes avant, arrière, gauche, droite, supérieur, inférieur sont définis par rapport à un véhicule automobile avançant vers l'avant sur une voie de circulation.

Un véhicule automobile 100 comprend au moins deux rangées de sièges (non représentées) et un coffre à bagages, généralement situé à l'arrière du véhicule 100. Une rangée avant comprend le siège du conducteur et un siège passager et une rangée arrière comprend deux ou trois sièges arrière. Le dossier des sièges arrière peut se rabattre ou être démonté afin afin de former un compartiment à bagages en lieu et place des sièges arrière, permettant d'augmenter le volume de rangement du coffre.

Les dossiers des sièges arrière sont montés en rotation par rapport au châssis 110 du véhicule 100 au niveau de leur partie inférieure afin d'être rabattus. Les dossiers sont en outre fixés au châssis 110 du véhicule 100 au niveau de leur partie supérieure par un système de crochet. Le système de crochet des dossiers coopère avec des moyens d'attache du véhicule 100 qui sont dans cet exemple une pluralité de crochets d'attache 10, également désignée « fils d'assise », solidaires au châssis 110.

Le véhicule 100 comprend au moins deux crochets d'attache 10 : un crochet situé à gauche et un crochet situé à droite du véhicule 100 afin de fixer le dossier des différents sièges arrière.

Pour cacher les bagages rangés dans le compartiment à bagages, le véhicule 100 comprend un cache-bagages 20 maintenu au-dessus du compartiment à bagages par un support 30 comme illustré à la figure 1.

Le cache-bagages 20 présente une forme sensiblement plane dont la surface opaque permet de recouvrir le dessus du compartiment à bagages tout en empêchant une personne située à l'extérieur du véhicule 100 de voir les bagages placés à l'intérieur du véhicule 100 au niveau du compartiment à bagages. Un tel cache-bagages 20 étant connu, il ne sera pas décrit plus en détail.

Le support 30 du cache-bagages 20 permet de maintenir le cache-bagages 20 au véhicule 100. Le support 30 est une structure, d'une part, fixée au véhicule 100 au niveau d'au moins un point de fixation et, d'autre part, sur laquelle est montée le cache-bagages 20. De préférence, le support 30 est un tube, notamment métallique. Dans cet exemple, le support 30 s'étend, depuis un point de fixation situé à l'arrière du compartiment à bagage à cacher, vers l'avant du véhicule 100 afin de s'étendre au-dessus du compartiment à bagages. Avantageusement, le support 30 est fixé au véhicule 100 au niveau de deux points de fixation : un point de fixation gauche et un point de fixation droite.

En référence aux figures 1 à 4, la bride de maintien 40 selon l'invention permet de fixer le support 30 aux crochets d'attache 10 des dossiers rabattables ou démontables des sièges arrière. Ainsi, le crochet d'attache 10 gauche et le crochet d'attache 10 droit forment respectivement le point de fixation gauche et le point de fixation droit du support 30. Le cache-bagages 20 s'étend vers l'avant de ces points de fixation.

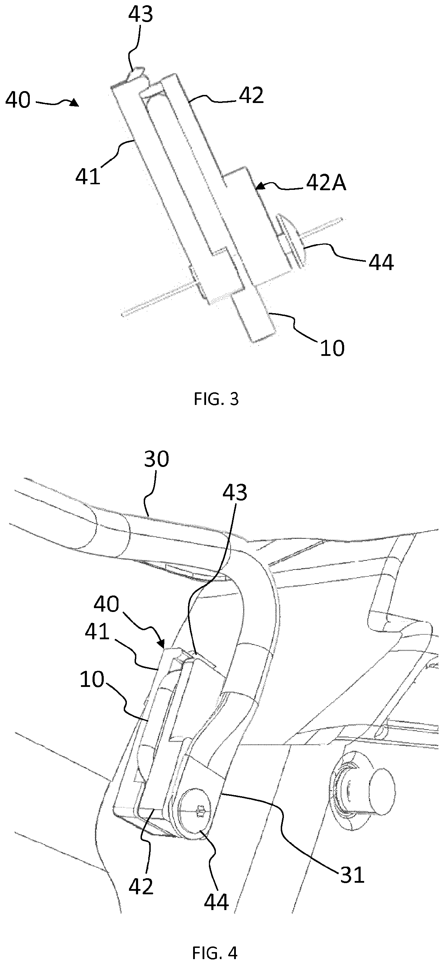

En référence aux figures 2 et 3, une bride de maintien 40 comprend un premier élément 41 et un deuxième élément 42 fixés ensemble de part et d'autre du crochet d'attache 10.

Dans cet exemple, le premier et le deuxième élément 41, 42 sont réalisés par moulage, notamment en matière plastique.

Le premier élément 41 comprend, au niveau de sa partie inférieure, un trou taraudé et, au niveau de sa partie supérieure, des moyens d'attache, par exemple une encoche.

Le deuxième élément 42 comprend, au niveau de sa partie inférieure, un trou et, au niveau de sa partie supérieure, un crochet de fixation 43 adapté pour coopérer avec les moyens d'attache du premier élément 41 afin de fixer le premier et le deuxième éléments 41, 42 au niveau de leur partie supérieure. Le deuxième élément 42 comprend une surface extérieure 42A située du côté opposé au crochet d'attache 10 lorsque la bride de maintien 40 est montée sur le crochet d'attache 10.

La bride de maintien 40 comprend en outre une vis 44. La vis 44 est adaptée pour traverser l'orifice du deuxième élément 42 et la tête de la vis 44 est en appui contre la surface extérieure 42A du deuxième élément 42 lorsque la bride de maintien 40 est assemblée. La vis 44 est en outre adaptée pour être vissée dans le trou taraudé du premier élément 41 afin de fixer le premier et le deuxième éléments 41, 42 au niveau de leur partie inférieure.

L'assemblage de la bride de maintien 40 est ainsi rapide et aisée grâce à l'unique vis 44 et au crochet de fixation 43.

Lors de l'assemblage de la bride de maintien 40, le premier élément 41 est placé d'un côté du crochet d'attache 10 et le deuxième élément 42 est placé du côté opposé du crochet d'attache 10 afin de maintenir le crochet 10 entre le premier et le deuxième élément 41, 42. Autrement dit, le crochet d'attache 10 du véhicule 100 est pris en sandwich entre le premier et le deuxième élément 41, 42 de la bride de maintien 40.

Une bride de maintien 40 est ainsi aisée à monter sur un crochet d'attache 10 de véhicule 100. De plus, le crochet d'attache 10 étant déjà présent dans le véhicule 100 afin d'attacher le dossier rabattable des sièges arrière, le montage de la bride de maintien 40 selon l'invention permet de limiter le nombre de pièces supplémentaires nécessaires au montage du cache-bagages 20. Avantageusement, la bride de maintien 40 est symétrique, autrement dit, elle peut être montée sur le crochet d'attache 10 gauche ou bien sur le crochet d'attache 10 droit, ce qui limite le nombre de pièces différentes et rend aisée la logistique.

Comme illustré à la figure 4, le support 30 du cache-bagages 20 est fixé à la bride de maintien 40 entre la surface extérieure 42A du deuxième élément 42 et la tête de la vis 44. Pour ce faire, le support 30 comprend, au niveau d'une extrémité, une partie aplatie 31 comprenant un orifice traversée par la vis 44. Ainsi, lorsque la bride de maintien 40 est montée, le crochet d'attache 10, le deuxième élément 42 de la bride de maintien 40 et le support 20 sont fixés par serrage entre la tête de la vis 44 et le premier élément 41 de la bride de maintien 40 dans laquelle la vis 44 est vissée.

La bride de maintien 40 selon l'invention forme une interface commune de montage d'un support 30 de cache-bagages 20. Ainsi, la bride de maintien 40 peut être montée sur différents types de véhicule 100 comprenant un crochet d'attache 10 du dossier rabattable d'un siège.

## Revendications

1. Bride (40) de maintien d'un support (30) de cache-bagages (20) de véhicule (100), ledit véhicule (100) comprenant un siège présentant un dossier rabattable ou démontable, ainsi que des moyens d'attache (10) dudit dossier rabattable ou démontable du siège, ladite bride de maintien (40) étant adaptée pour être fixée aux moyens d'attache (10) et ladite bride de maintien (40) étant configurée pour recevoir le support (30) de cache-bagages (20) pour permettre le montage dudit support (30) de cache-bagages (20) sur lesdits moyens d'attache (10).

2. Bride (40) selon la revendication 1, comprenant au moins un premier élément (41) et un deuxième élément (42), lesdits premier et deuxième éléments (41, 42) étant adaptés pour être assemblés l'un à l'autre de part et d'autre des moyens d'attache (10) de façon à permettre la fixation de ladite bride (40) aux moyens d'attache (10).

3. Bride (40) selon la revendication précédente, comprenant une unique vis (44) fixant le premier et le deuxième éléments (41, 42) l'un à l'autre.

4. Bride (40) selon l'une des revendications 2 à 3, comprenant un crochet de fixation (43) reliant le premier et le deuxième éléments (41, 42).

5. Véhicule automobile (100) comprenant un siège présentant un dossier rabattable ou démontable, ainsi que des moyens d'attache (10) dudit dossier rabattable du siège, au moins une bride de maintien (40) selon l'une des revendications précédentes fixée audits moyens d'attache (10) et un support (30) de cache-bagages (20) monté sur les moyens d'attache (10) par ladite bride de maintien (40).

6. Véhicule (100) selon la revendication précédente, dans lequel le support (30) est fixé à la bride de maintien (40) par serrage entre un élément (42) de la bride de maintien (40) et une tête de vis (44).

7. Véhicule (100) selon l'une des revendications 5 à 6, dans lequel la bride de maintien (40) comprend un premier et un deuxième éléments (41, 42) montés de part et d'autre des moyens d'attache (10) par serrage à l'aide d'une vis (44).

8. Véhicule (100) selon la revendication précédente dans lequel le serrage des premier et deuxième éléments (41, 42) de la bride de maintien (40) entre eux et le serrage du support (30) à la bride de maintien (40) sont réalisés par une même vis (44).

9. Véhicule (100) selon l'une des revendications 5 à 8, dans lequel les moyens d'attache comprennent au moins un crochet d'attache (10).

10. Véhicule (100) selon la revendication précédente, dans lequel le support (30) de cache-bagages (20) est monté à deux crochets d'attache (10) à l'aide de deux brides de maintien (40).
